# NOUVEAU FASCICULE DE BREVET EUROPEEN

(11) **EP 1 972 516 B2**
(45) Date de publication et mention de la décision concernant l'opposition: **26.10.2022**
(45) Mention de la délivrance du brevet: 27.09.2017
(21) Numéro de dépôt: 08101847.5
(22) Date de dépôt: 21.02.2008
(51) Int. Cl.: G01D 5/251, B60T 13/52, B60T 11/16

(54) **Procédé et servomoteur destinés à détecter le freinage d'un véhicule et procédé de fabrication d'un tel servomoteur**
Verfahren und Servomotor zur Bremserkennung eines Fahrzeugs und Herstellungsverfahren eines solchen Servomotors
Method and servomotor designed to detect the braking of a vehicle and method of manufacturing such a servomotor

(30) Priorité: 22.03.2007 FR 0702099
(43) Date de publication de la demande: 24.09.2008
(73) Titulaire: Robert Bosch GmbH, 70442 Stuttgart (DE)
(72) Inventeur: Richard, Philippe, 77500, CHELLES (FR); Fourcade, Jean, 77420, CHAMPS SUR MARNE (FR); Lacroix, Stephane, 77220, TOURNAN EN BRIE (FR); Castello, Olivier, 77450, ESBLY (FR)

(56) Documents cités:
- EP-A1- 0 480 608
- WO-A-02/066307
- WO-A1-02/36400
- DE-A1- 3 124 755
- DE-A1- 3 240 680
- DE-A1- 3 301 042
- DE-A1- 3 723 839
- DE-A1- 3 723 842
- DE-A1- 3 723 914
- DE-A1- 3 723 916
- DE-A1- 3 844 068
- DE-A1- 10 133 163
- DE-A1- 10 323 655
- DE-A1- 19 915 832
- DE-B4- 10 137 602
- DE-C1- 3 928 874
- KR-B1- 100 654 335

## Description

La présente invention se rapporte à un procédé destiné à détecter le freinage d'un véhicule.

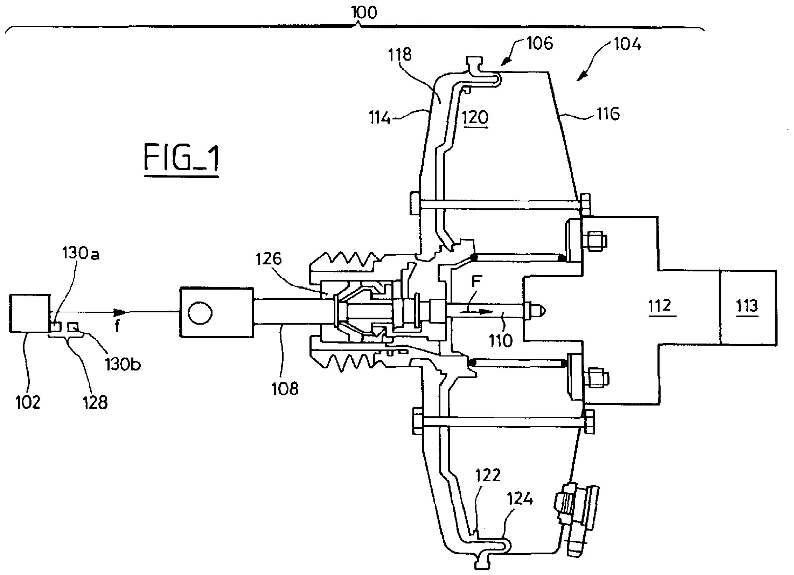

Un dispositif 100 (figure 1) de freinage d'un véhicule est généralement commandé par un conducteur au moyen d'une pédale 102 de frein destinée à transmettre la force f de commande exercée sur cette pédale 102 jusqu'à un système de freinage 113 comprenant, par exemple, un étrier équipé d'un piston et de plaquettes de frein destinées à serrer un disque solidaire d'une roue freinée.

Pour amplifier la force f exercée par ce conducteur en une force F transmise au système de freinage, il est connu d'utiliser un servomoteur 104 pneumatique d'assistance au freinage.

Pour cela, ce servomoteur 104 comporte un boîtier 106, coopérant avec une tige 108 de commande, reliée à la pédale 102 de frein, et avec une tige 110 de poussée reliée à un maître-cylindre 112 relié au système 113 de freinage, de telle sorte que lorsque la tige 108 de commande est déplacée au moyen d'une action f transmise par la pédale 102 de frein, le servomoteur 106 déplace la tige 110 au moyen d'une poussée F d'intensité supérieure à l'intensité de la commande f.

A cet effet, le boîtier 106 comprend un couvercle 114 et un cylindre 116 coopérant avec ce couvercle 114 de manière étanche, le volume interne du boîtier 106 étant alors divisé en une première chambre 118, dite chambre arrière, et en une deuxième chambre 120, dite chambre avant, au moyen d'une jupe rigide 122 et d'une membrane 124 flexible assurant l'étanchéité entre ces deux chambres 118 et 120.

Dans un premier temps, lorsque le servomoteur 104 est inactif, c'est-à-dire lorsque aucun freinage n'est sollicité par le conducteur du véhicule, la pression dans les chambres arrière 118 et avant 120 est maintenue inférieure à la pression atmosphérique au moyen d'un dispositif de pompage non représenté.

Dans un deuxième temps, lorsque le conducteur du véhicule appuie sur la pédale 102 de frein, la tige 108 de commande se déplace par l'action de la commande f et active un mécanisme 126 pneumatique de telle sorte qu'une entrée d'air à pression atmosphérique s'effectue dans la chambre arrière 118.

La pression dans la chambre arrière 118 étant supérieure à la pression dans la chambre avant 120, la membrane 122 et la jupe 124 sont soumises à une poussée F d'intensité égale à ΔP×S où ΔP est l'écart de pression entre les deux chambres et S la surface de la membrane.

Le déplacement de la jupe 122, et de la tige 110 associée, transmet ainsi une poussée F au maître-cylindre 112 associé au système de freinage.

Par ailleurs, la détection d'un freinage est une opération essentielle dans un véhicule, par exemple pour générer un signal destiné à allumer des feux de stop à l'arrière du véhicule, indiquant ainsi à d'autres véhicules le début du freinage, ou pour activer différentes systèmes électroniques liés au freinage, tel que l'Anti Blocking System (ABS).

Une telle détection utilise actuellement un capteur 128 de déplacement de la pédale 102 de frein qui comprend un premier connecteur 130a fixe et un second connecteur 130b mobile sur la pédale de telle sorte que cette dernière vienne au contact de la première, fermant un circuit électrique, lorsque le conducteur appuie sur la pédale 102 de frein. WO 02/066307 A révèle un procédé de détection de freinage d'un véhicule muni d'un maître cylindre et d'un piston primaire. La présente invention résulte de la constatation de différents problèmes soulevés par le procédé de détection de freinage selon l'art antérieur. DE 32 40680 A1 révèle un procédé de détection de freinage selon le préambule de la revendication 1.

Un premier problème réside dans le fait que le capteur 128 actuel est un capteur à contact mécanique qui présente donc une usure significative et, par conséquent, un risque de défaillances croissant avec le temps.

Un deuxième problème résulte du fait que, lors de la fabrication du véhicule, il est nécessaire d'effectuer un montage spécifique du capteur 128, de ses connecteurs 130a et 130b et des câbles associés à ces éléments (non représentés) en dessous de la pédale 102 de frein, ce qui représente un coût en temps de production propre au montage de ces différents éléments.

De plus, ces montages, et les réglages postérieurs de ces éléments, sont particulièrement pénibles et difficiles pour les personnes chargées de ce travail étant donnée la position de la pédale de frein, si tuée dans un espace restreint et d'accès difficile en bas de l'habitacle du véhicule.

L'invention résout au moins un de ces problèmes. Elle concerne un procédé de détection de freinage selon la revendication 1.

Grâce à l'invention, le dispositif de détection de freinage du véhicule est intégré au servomoteur de telle sorte que cette fonction ne nécessite plus de montage et de réglages propres sur la chaîne de montage du véhicule, réduisant ainsi le coût de montage de ce dispositif de détection dans le véhicule.

L'invention permet utilisation de capteurs sans contacts vis-à-vis desquels il ne se produit plus d'usure mécanique de telle sorte que la durée de vie du détecteur et sa fiabilité sont améliorées.

Par ailleurs, on diminue la problématique d'interopérabilité des différents systèmes en cas de pannes ou de changements ultérieurs en intégrant le dispositif de détection de freinage dans le servomoteur car la distribution de pièces entre l'habitacle et le moteur n'impose plus l'utilisation d'un type de dispositif donné.

Enfin, on élimine aussi les efforts particulièrement pénibles sur la chaîne de montage relatifs à la position du dispositif de détection qui n'est plus située dans un espace d'accès difficile dans l'habitacle conducteur.

Dans une réalisation, le pointeau coulisse dans un logement du maître cylindre.

Dans une réalisation, le pointeau est solidaire du plateau par l'intermédiaire d'un ressort à spires jointives permettant de corriger les défauts de coaxialité liés à la construction de l'ensemble.

Dans une réalisation, le capteur utilise un interrupteur à lame souple sensible à un champ magnétique qui varie en fonction du déplacement du pointeau.

Selon une réalisation, le capteur utilise l'effet Hall pour détecter un déplacement du pointeau.

Dans une réalisation, le pointeau génère un champ magnétique dans son extrémité proche du capteur, ce capteur étant sensible au champ magnétique du pointeau.

Selon une réalisation, le capteur est un capteur à contacteur comprenant une commande mobile d'un interrupteur, le pointeau venant en contact de la commande lorsque le pointeau se déplace.

Dans une réalisation, le capteur est situé dans un boîtier agencé au maître cylindre.

Selon une réalisation, le boîtier est étanche.

Dans une réalisation, le boîtier est positionné par rapport au maître cylindre par l'intermédiaire d'au moins un rail du maître-cylindre et d'une butée sur ce rail, le rail et la butée permettant d'assurer un positionnement axial sans jeu.

Selon une réalisation, le boîtier est fixé au rail par l'intermédiaire d'une pince élastique ceinturant le boîtier.

D'autres caractéristiques et avantages de l'invention apparaîtront avec la description effectuée ci-dessous, à titre non limitatif, en référence aux figures ci-jointes sur lesquelles :
- La figure 1, déjà décrite ci-dessus, est un schéma du fonctionnement d'un dispositif de freinage connu,
- La figure 2 représente une coupe axiale schématique d'un servomoteur conforme à l'invention, et
- Les figures 3a et 3b représentent une réalisation d'un capteur mécanique mis en oeuvre dans le servomoteur décrit à la figure 2.
- La figure 4 représente une vue en trois dimensions d'une réalisation de l'agencement d'un boîtier 402, contenant un capteur non représenté, d'un pointeau 404 et d'un plateau 406 (équivalent au plateau 210 de la figure 2) à un maître cylindre 400. Le plateau 406 est réalisé en matière plastique. Il comprend des pattes 408 élastiques permettant de l'encliqueter dans la gorge du piston primaire.

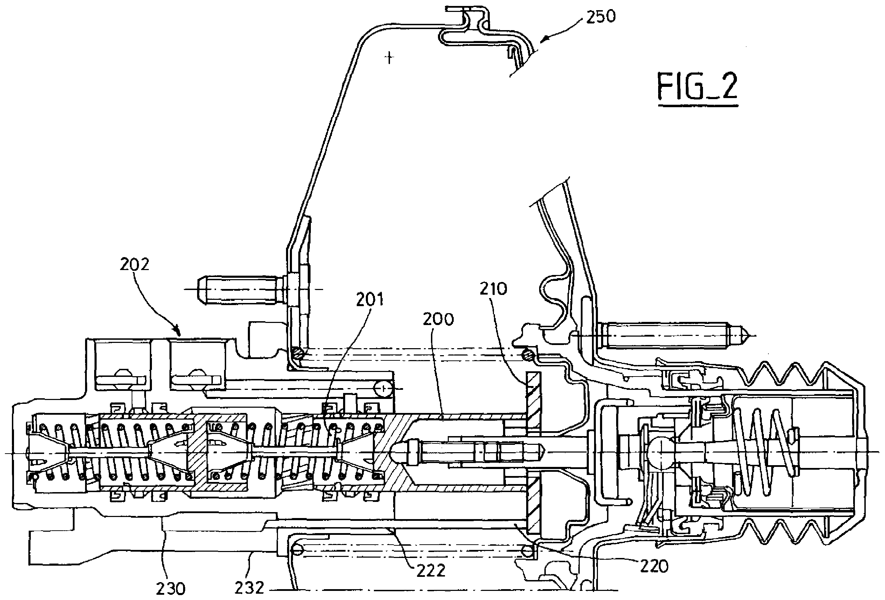

Sur la figure 2 est représenté un servomoteur 250 conforme à l'invention, c'est-à-dire comprenant un pointeau 220 associé au mouvement de la tige 200 de poussée du servomoteur, cette tige 200 étant analogue à la tige 110 de poussée décrite à la figure 1.

Selon l'invention, le procédé de détection de freinage d'un véhicule est muni d'un maître cylindre 202, 400 et d'un piston primaire 200, caractérisé en ce qu'on utilise un pointeau 220,305,404, agencé parallèlement au piston primaire 200 de façon à reproduire les déplacements du piston primaire 200, et un capteur 230,300 de déplacement du pointeau 220,305,404, pour détecter un freinage.

Pour cela, le piston 200 est muni d'un plateau 210, par exemple en plastique, qui permet de disposer le pointeau 220 parallèlement au piston 200.

En outre, le pointeau 220 est maintenu parallèle au piston 200 grâce à un logement 222 du maître cylindre réalisant une étanchéité au vide entre le pointeau 220 et le logement 222, dans lequel coulisse le pointeau 220.

Par ailleurs, un capteur 230 des déplacements du pointeau 220 est intégré dans un boîtier 232 associé au maître cylindre 202 du servomoteur de telle sorte que le pointeau 222 coulisse dans ce boîtier 232, au voisinage du détecteur 230, lors de ses déplacements.

Le capteur 230 intégré dans le boîtier 232 peut être un interrupteur à lame souple, dénommé par la suite interrupteur I.L.S., comprenant deux lames métalliques, en vis-à-vis, sensibles à un champs magnétique et formant un circuit de détection.

Plus précisément, ces lames métalliques sont telles que, selon qu'elles soient en présence ou en absence d'un champ magnétique, elles viennent en contact, fermant le circuit de détection, ou elles restent distantes, ouvrant le circuit de détection, l'une de l'autre.

Ainsi, en considérant que le pointeau 220 est aimanté à son extrémité coulissant au voisinage du détecteur 230, il apparaît que, selon la position de l'extrémité du pointeau par rapport aux lames, celles-ci sont soit en contact lorsque le pointeau 222 s'approche, soit distantes lorsque le pointeau 222 s'éloigne.

En d'autres termes, un courant variable est obtenu en sortie du capteur ILS 230 en fonction de la position du pointeau 220, c'est-à-dire en fonction de la position du piston 200 et, par conséquent, de la commande d'un freinage.

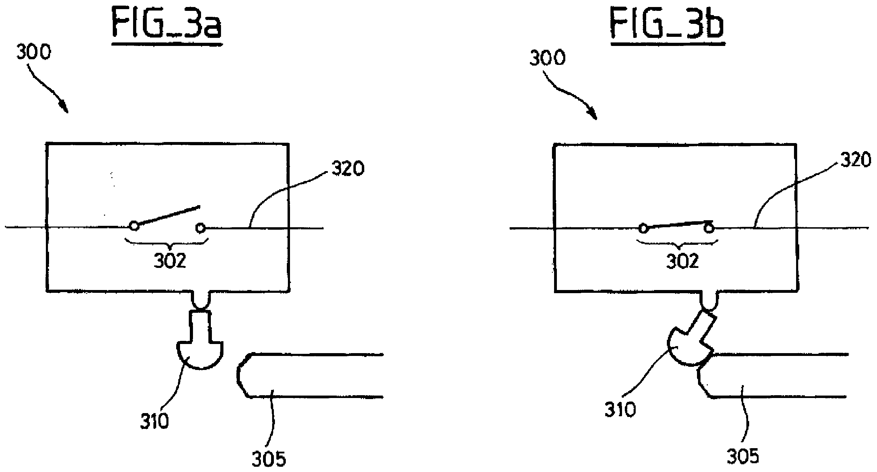

Dans une autre réalisation, le boîtier 232 comprend un capteur mécanique à contacteur, ou « micro-switch en anglais », décrit en détail ci-dessous à l'aide des figures 3a et 3b.

Plus précisément, on a représenté un tel capteur 300 au repos sur la figure 3a, c'est-à-dire lorsque aucun freinage n'est commandé.

Il apparaît que ce capteur 300 comprend un circuit électrique 320 ainsi qu'un interrupteur 302 qui, lorsque le pointeau 305 est maintenu distant, maintient le circuit ouvert de telle sorte qu'aucun courant ne peut parcourir le circuit 320.

Inversement, lorsqu'un freinage est commandé (figure 3b), l'extrémité 305 du pointeau vient au contact d'une commande 310 de l'interrupteur 302 qui ferme alors le circuit 320, permettant le passage du courant dans ce dernier.

Ainsi, le courant qui traverse le circuit 320 est utilisé dans cette réalisation comme un signal de freinage aisément détectable, ce courant étant nul lorsque aucun freinage n'est commandé et non nul lorsqu'un tel freinage est effectué.

Toutefois, il convient de signaler que cette disposition peut être facilement échangée de façon à disposer d'un courant non nul au repos et d'un courant nul en cas de freinage.

Dans une troisième réalisation, le capteur 230 intégré dans le boîtier 232 utilise l'effet Hall pour détecter le déplacement du pointeau, ce dernier étant aimanté comme dans la première réalisation.

Il convient de noter que le boîtier doit être particulièrement résistant aux conditions difficiles du compartiment moteur, à savoir la température élevée et la nécessité d'une étanchéité forte, par vis-à-vis d'un jet de liquide intense de nettoyage.

C'est pourquoi, dans une réalisation, ce boîtier est en polyamide 66, comprenant 30% de verre, matériau connu pour ses propriétés de résistances thermiques et d'étanchéité.

Par ailleurs, le pointeau est en plastique rigide.

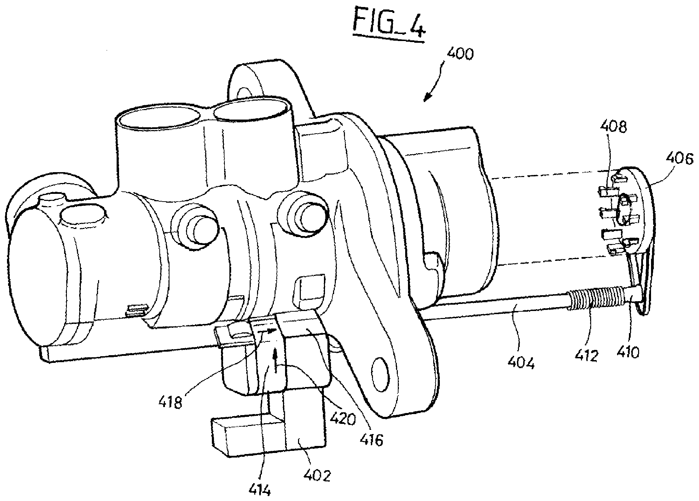

La figure 4 représente une vue en trois dimensions d'une réalisation de l'agencement d'un boîtier 402, contenant un capteur non représenté, d'un pointeau 404 et d'un plateau 406 (équivalent au plateau 210 de la figure 2) à un maître cylindre 400. Le plateau 406 est réalisé en matière plastique. Il comprend des pattes 408 élastiques permettant de l'encliqueter dans la gorge du piston primaire.

Le pointeau 404 est relié au plateau 406, au niveau d'une saillie 410 conique du plateau 406, par l'intermédiaire d'un ressort 412 hélicoïdal à spires jointives. Le diamètre du ressort 412 est légèrement inférieur au diamètre de la saillie 410 du plateau sur laquelle il se visse en force ou s'ajuste.

Ce ressort 412 réalise deux fonctions :
- Réglage de la course du pointeau 404 : comme il faut ajuster la course du pointeau 404 de façon à bien régler sa coopération avec le capteur, il suffit alors d'effectuer ce réglage en vissant ou en ajustant plus ou moins le ressort 412 sur la saillie 410.
- Alignement : ce ressort 412 peut travailler perpendiculairement à son axe grâce à son élasticité pour ainsi pouvoir corriger tout le long de la vie utile du maître cylindre 400 d'éventuels légers défauts d'alignements entre la saillie 410 du plateau 406, le logement du maître-cylindre 400 que traverse le pointeau 404 et l'entrée du boîtier 402 contenant le capteur.

Le capteur (indépendamment de son type) est soudé ou collé au boîtier 402.

Le boîtier 402 est fixé sur le maître cylindre 400 grâce à une pince 414 ou lame recourbée élastique, placée en force selon la flèche 420 et qui ceinture le boîtier 402 pour reposer sur deux rails 416 du maître cylindre 400.

Ensuite, il est possible de faire coulisser (selon la flèche 418) le boîtier 402 jusqu'à une butée du maître cylindre 400 pour placer au mieux le boîtier en vue de respecter l'alignement plateau 406, pointeau 404 et boîtier 402.

Ainsi, le boîtier 402 est immobilisé parallèlement à l'axe du maître cylindre 400 et perpendiculairement à cet axe.

Le ou les rails 416 et la butée permettant d'assurer un positionnement axial sans jeu du boîtier sur le maître cylindre 400.

La présente invention est susceptible de nombreuses variantes en fonction de divers paramètres comme, par exemple et sans limitation, le choix du type de capteur 230, le choix passant ou ouvert du circuit traversant le capteur 230 selon la détection ou pas de freinage et le positionnement du capteur 230 le long du corps du maître cylindre.

## Revendications

1. Procédé de détection de freinage d'un véhicule muni d'un maître cylindre (202, 400) et d'un piston primaire (200), dans lequel on utilise un pointeau (220, 305, 404), agencé parallèlement au piston primaire (200) de façon à reproduire les déplacements du piston primaire (200), et un capteur (230, 300) de déplacement du pointeau (220, 305, 404), pour détecter un freinage,
**caractérisé en ce que** le pointeau (220, 305, 404) est solidaire du piston primaire du maître cylindre (200) par l'intermédiaire d'un plateau (210, 406) situé dans le boîtier d'un servomoteur (250) associé au maître cylindre (202, 400).

2. Procédé selon la revendication 1, **caractérisé en ce que** le pointeau (220, 305, 404) coulisse dans un logement (222) du maître-cylindre (202, 400).

3. Procédé selon la revendication 2, **caractérisé en ce que** le pointeau (220, 305, 404) est solidaire du plateau (210, 406) par l'intermédiaire d'un ressort (412) à spires jointives.

4. Procédé selon la revendication 1 ou 2, **caractérisé en ce que** le capteur (230) utilise un interrupteur à lame souple sensible à un champ magnétique qui varie en fonction du déplacement du pointeau (220, 404).

5. Procédé selon la revendication 1 ou 2, **caractérisé en ce que** le capteur (230) utilise l'effet Hall pour détecter un déplacement du pointeau (220, 404).

6. Procédé selon l'une des revendications précédentes, **caractérisé en ce que** le pointeau (220, 404) génère un champ magnétique dans son extrémité proche du capteur (230), ce capteur étant sensible au champ magnétique du pointeau.

7. Procédé selon la revendication 1, 2 ou 3, **caractérisé en ce que** le capteur (230, 300) est un capteur (230, 300) à contacteur comprenant une commande (310) mobile d'un interrupteur (302), le pointeau (220, 305, 404) venant en contact de la commande (310) lorsque ce pointeau (220, 305, 404) se déplace.

8. Procédé selon l'une des revendications précédentes **caractérisé en ce que** le capteur (230, 300) est situé dans un boîtier (232, 402) solidaire du maître cylindre (202, 400) .

9. Procédé selon la revendication 8, **caractérisé en ce que** le boîtier (232, 402) du capteur (230, 300) est étanche.

10. Procédé selon la revendication 8 ou 9, **caractérisé en ce que** le boîtier (402) est positionné par rapport au maître cylindre (400) par l'intermédiaire d'au moins un rail (416) du maître cylindre (400) et d'une butée sur ce rail (416), le rail (416) et la butée permettant d'assurer un positionnement axial sans jeu.

11. Procédé selon la revendication 10, **caractérisé en ce que** le boîtier (402) est fixé au rail (416) par l'intermédiaire d'une pince (414) élastique ceinturant le boîtier (402).

## Patentansprüche

1. Verfahren zur Erkennung des Bremsens eines Fahrzeugs, das mit einem Hauptbremszylinder (202, 400) und mit einem Primärkolben (200) ausgestattet ist, in welchem ein Bolzen (220, 305, 404), der parallel zu dem Primärkolben (200) angeordnet ist, um die Bewegungen des Primärkolbens (200) zu reproduzieren, und ein Sensor (230, 300) für die Bewegung des Bolzens (220, 305, 404) verwendet werden, um ein Bremsen zu erkennen,
**dadurch gekennzeichnet, dass** der Bolzen (220, 305, 404) mit dem Primärkolben des Hauptbremszylinders (200) über eine Platte (210, 406) fest verbunden ist, die sich im Gehäuse eines Servomotors (250) befindet, der dem Hauptbremszylinder (202, 400) zugeordnet ist.

2. Verfahren nach Anspruch 1, **dadurch gekennzeichnet, dass** der Bolzen (220, 305, 404) in einer Aufnahme (222) des Hauptbremszylinders (202, 400) gleitet.

3. Verfahren nach Anspruch 2, **dadurch gekennzeichnet, dass** der Bolzen (220, 305, 404) mit der Platte (210, 406) über eine Feder (412) mit aneinander anliegenden Windungen fest verbunden ist.

4. Verfahren nach Anspruch 1 oder 2, **dadurch gekennzeichnet, dass** der Sensor (230) einen Reed-Schalter verwendet, der für ein Magnetfeld empfindlich ist, welches in Abhängigkeit von der Bewegung des Bolzens (220, 404) variiert.

5. Verfahren nach Anspruch 1 oder 2, **dadurch gekennzeichnet, dass** der Sensor (230) den Hall-Effekt nutzt um eine Bewegung des Bolzens (220, 404) zu erkennen.

6. Verfahren nach einem der vorhergehenden Ansprüche, **dadurch gekennzeichnet, dass** der Bolzen (220, 404) in seinem nahe dem Sensor (230) befindlichen Ende ein Magnetfeld erzeugt, wobei dieser Sensor für das Magnetfeld des Bolzens empfindlich ist.

7. Verfahren nach Anspruch 1, 2 oder 3, **dadurch gekennzeichnet, dass** der Sensor (230, 300) ein Sensor (230, 300) mit Kontaktgeber ist, der ein bewegliches Steuerelement (310) eines Schalters (302) umfasst, wobei der Bolzen (220, 305, 404) mit dem Steuerelement (310) in Kontakt kommt, wenn dieser Bolzen (220, 305, 404) sich bewegt.

8. Verfahren nach einem der vorhergehenden Ansprüche, **dadurch gekennzeichnet, dass** sich der Sensor (230, 300) in einem Gehäuse (232, 402) befindet, das mit dem Hauptbremszylinder (202, 400) fest verbunden ist.

9. Verfahren nach Anspruch 8, **dadurch gekennzeichnet, dass** das Gehäuse (232, 402) des Sensors (230, 300) dicht ist.

10. Verfahren nach Anspruch 8 oder 9, **dadurch gekennzeichnet, dass** das Gehäuse (402) bezüglich des Hauptbremszylinders (400) über wenigstens eine Schiene (416) des Hauptbremszylinders (400) und einen Anschlag auf dieser Schiene (416) positioniert wird, wobei die Schiene (416) und der Anschlag ermöglichen, eine spielfreie axiale Positionierung sicherzustellen.

11. Verfahren nach Anspruch 10, **dadurch gekennzeichnet, dass** das Gehäuse (402) an der Schiene (416) über eine elastische Klemme (414) befestigt wird, die das Gehäuse (402) umklammert.

## Claims

1. Method of detecting the braking of a vehicle provided with a master cylinder (202, 400) and with a primary piston (200), wherein a plunger (220, 305, 404), arranged parallel to the primary piston (200) so as to reproduce the movements of the primary piston (200), and a sensor (230, 300) which senses the movement of the plunger (220, 305, 404) are used to detect a braking operation,
**characterized in that** the plunger (220, 305, 404) is secured to the primary piston of the master cylinder (200) by way of a plate (210, 406) situated in the casing of a booster (250) associated with the master cylinder (202, 400).

2. Method according to Claim 1, **characterized in that** the plunger (220, 305, 404) slides in a housing (222) of the master cylinder (202, 400).

3. Method according to Claim 2, **characterized in that** the plunger (220, 305, 404) is secured to the plate (210, 406) by way of a spring (412) having contiguous turns.

4. Method according to Claim 1 or 2, **characterized in that** the sensor (230) uses a reed switch sensitive to a magnetic field which varies according to the movement of the plunger (220, 404).

5. Method according to Claim 1 or 2, **characterized in that** the sensor (230) uses the Hall effect to detect a movement of the plunger (220, 404).

6. Method according to one of the preceding claims, **characterized in that** the plunger (220, 404) generates a magnetic field in its end close to the sensor (230), this sensor being sensitive to the magnetic field of the plunger.

7. Method according to Claim 1, 2 or 3, **characterized in that** the sensor (230, 300) is a contactor-type sensor (230, 300) comprising a movable control (310) of a switch (302), the plunger (220, 305, 404) coming into contact with the control (310) when this plunger (220, 305, 404) moves.

8. Method according to one of the preceding claims, **characterized in that** the sensor (230, 300) is situated in a casing (232, 402) secured to the master cylinder (202, 400).

9. Method according to Claim 8, **characterized in that** the casing (232, 402) of the sensor (230, 300) is sealed.

10. Method according to Claim 8 or 9, **characterized in that** the casing (402) is positioned with respect to the master cylinder (400) by means of at least one rail (416) of the master cylinder (400) and a stop on this rail (416), the rail (416) and the stop providing playfree axial positioning.

11. Method according to Claim 10, **characterized in that** the casing (402) is fastened to the rail (416) by means of a spring clip (414) enclosing the casing (402) .
